(19) Europäisches Patentamt
European Patent Office
Office européen des brevets

(11) **EP 3 782 714 A1**

(12) **EUROPEAN PATENT APPLICATION**
published in accordance with Art. 153(4) EPC

(43) Date of publication:
**24.02.2021 Bulletin 2021/08**

(51) Int Cl.:
**B01D 53/28** (2006.01)   **B01J 20/10** (2006.01)
**B01J 20/18** (2006.01)   **B01J 20/30** (2006.01)
**F24F 3/14** (2006.01)

(21) Application number: **19788092.5**

(22) Date of filing: **12.04.2019**

(86) International application number:
**PCT/JP2019/015937**

(87) International publication number:
**WO 2019/203146 (24.10.2019 Gazette 2019/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.04.2018   JP 2018078891**

(71) Applicant: **SUMITOMO CHEMICAL COMPANY
LIMITED
Chuo-ku
Tokyo 104-8260 (JP)**

(72) Inventors:
• **YONEMOTO, Tetsuro
Ichihara-shi, Chiba 299-0195 (JP)**
• **SEKI, Kohei
Ichihara-shi, Chiba 299-0195 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Straße 22
85354 Freising (DE)**

(54) **HUMIDITY CONTROL MEMBER AND METHOD FOR MANUFACTURING SAME**

(57)    Provided are a humidity conditioning material that adsorbs and desorbs a large amount of moisture, and a production method thereof.

A humidity conditioning material comprising:
a porous silica material having an average pore diameter of 1 nm or more; and a carrier,
wherein the humidity conditioning material contains an alkali metal element in an amount of 0.001 wt% or more and less than 1.0 wt%.

A method for producing a humidity conditioning material involving the following Step (1), Step (2), and Step (3).
Step (1): A dispersion medium is mixed with a porous silica material having an average pore diameter of 1 nm or more to obtain a slurry, and an amount of alkali metal element in the slurry is adjusted to be 0.001 wt% to 1 wt% relative to a solid content weight therein.
Step (2): The slurry obtained in Step (1) is applied to a carrier.
Step (3): The dispersion medium is removed from the carrier coated with the slurry obtained in Step (2) to yield a humidity conditioning material containing the porous silica material and the carrier.

**Description**

TECHNICAL FIELD

The present invention relates to a humidity conditioning material and a production method thereof.

BACKGROUND ART

Air-conditioning equipment that adjusts humidity of air is in widespread use. As an example of a humidity conditioning material which adjusts humidity of air and is employed in such air-conditioning equipment, Patent Document 1 discloses a dehumidifying material including a carrier that supports sodium Y-type zeolite.

PRIOR ART DOCUMENTS

PATENT DOCUMENTS

Patent Document 1: JP-A-2006-26494

SUMMARY OF THE INVENTION

PROBLEMS TO BE SOLVED BY THE INVENTION

In recent years, there has been a demand for a humidity conditioning material capable of absorbing and desorbing more moisture. An object of the present invention is to provide a humidity conditioning material capable of absorbing and desorbing a large amount of moisture.

MEANS FOR SOLVING THE PROBLEMS

The present invention provides the following [1] to [11].

[1] A humidity conditioning material including: a porous silica material having an average pore diameter of 1 nm or more; and a carrier, in which the humidity conditioning material contains an alkali metal element in an amount of 0.001 wt% or more and less than 1.0 wt%.
[2] The humidity conditioning material according to [1], further including an inorganic binder, in which the inorganic binder has an average particle diameter at least twice the average pore diameter of the porous silica material.
[3] The humidity conditioning material according to [1] or [2], further including a water-soluble polymer.
[4] The humidity conditioning material according to any one of [1] to [3], in which the carrier contains an inorganic fiber.
[5] The humidity conditioning material according to any one of [1] to [4], in which the alkali metal element is sodium and/or potassium.
[6] The humidity conditioning material according to any one of [1] to [5], in which the porous silica material has an average pore diameter of 1.0 to 3.0 nm.
[7] The humidity conditioning material according to any one of [1] to [6], in which the humidity conditioning material contains the alkali metal element in an amount of 0.006 to 0.8 wt%.
[8] The humidity conditioning material according to any one of [2] to [7], in which the inorganic binder has an average particle diameter 2.0 times or more and 15 times or less the average pore diameter of the porous silica material.
[9] The humidity conditioning material according to any one of [2] to [8], in which the inorganic binder has an average particle diameter of 15 nm or less.
[10] A method for producing a humidity conditioning material involving the following Step (1), Step (2), and Step (3).

Step (1): A dispersion medium is mixed with a porous silica material having an average pore diameter of 1 nm or more to obtain a slurry, and an amount of alkali metal element in the slurry is adjusted to be 0.001 wt% to 1 wt% relative to a solid content weight therein.
Step (2): The slurry obtained in Step (1) is applied to a carrier.
Step (3): The dispersion medium is removed from the carrier coated with the slurry obtained in Step (2) to yield a humidity conditioning material containing the porous silica material and the carrier.

[11] The method for producing a humidity conditioning material according to [10], the method further involving the following Step (4).

Step (4): The humidity conditioning material yielded in Step (3) is heated at a temperature of 300 degrees C or higher.

EFFECT OF THE INVENTION

According to an embodiment of the present invention, it is possible to obtain a humidity conditioning material capable of absorbing and desorbing a large amount of moisture.

MODE FOR CARRYING OUT THE INVENTION

A humidity conditioning material according to an embodiment of the present invention includes: a porous silica material having an average pore diameter of 1 nm or more; and a carrier, in which the humidity conditioning material contains an alkali metal element in an amount of 0.001 wt% or more and less than 1.0 wt%.

[Porous Silica Material]

In this description, the porous silica material is a substance including a silicon oxide having a porous structure as the main component.
Examples of the porous silica material include silica gel, zeolite, and mesoporous silica.
In this description, the "average pore diameter" of the porous silica material is a value calculated by the following Formula.

$$\text{Average pore diameter} = 4 \times \text{Total pore volume/Specific surface area}$$

The "total pore volume" herein is obtained from an amount of nitrogen adsorbed at a pressure close to a relative pressure ($P/P0 = 0.96$) on a nitrogen adsorption isotherm of the porous silica material. The "specific surface area" herein is determined by measuring the porous silica material by a BET method.
The porous silica material has an average pore diameter of 1 nm or more from a viewpoint of moisture absorption performance of the humidity conditioning material according to this embodiment. The porous silica material typically has an average pore diameter of 20 nm or less, preferably 1.0 to 5.0 nm, and more preferably 1.0 to 3.0 nm.
The porous silica material having an average pore diameter of 1 nm or more is obtained, for example, with a salt containing a quaternary ammonium ion represented by Formula (I) or an amine represented by Formula (II) as a template in the first step in a method for producing a porous silica material which is to be described. Selecting an appropriate template produces a porous silica material with a desired average pore diameter.
The porous silica material preferably has a specific surface area of 100 $m^2$/g or more from a viewpoint of moisture absorption performance of the humidity conditioning material according to this embodiment. The porous silica material typically has a specific surface area of 2000 $m^2$/g or less, preferably 100 to 2000 $m^2$/g, and more preferably 500 to 1500 $m^2$/g.
The porous silica material preferably has a total pore volume of 0.1 $cm^3$/g to 2.0 $cm^3$/g, more preferably 0.2 $cm^3$/g to 1.5 $cm^3$/g, and still more preferably 0.4 $cm^3$/g to 1.2 $cm^3$/g.
The porous silica material preferably has an average particle diameter of 0.1 $\mu$m to 500 $\mu$m, and more preferably 0.5 $\mu$m to 250 $\mu$m. From a viewpoint of a water adsorption and desorption rate of the humidity conditioning material according to this embodiment and from a viewpoint of adhesive strength between the carrier and the porous silica material, the porous silica material preferably has an average particle diameter of 500 $\mu$m or less.
A particle size distribution of the porous silica material may have a single peak or a plurality of peaks. In the humidity conditioning material according to this embodiment, a plurality of porous silica materials having different average particle diameters may be mixed and used as the porous silica material.
The average particle diameter of the porous silica material and the particle diameter distribution of the porous silica material are measured, for example, with a laser diffraction particle size analyzer (such as LA-950, manufactured by Horiba Ltd.) on a volumetric basis under the following conditions: water is used as a dispersion medium, a refractive index of a sample is 1.44, a refractive index of the dispersion medium is 1.33.
The method for producing a porous silica material includes, for example, the following first step, second step, and third step.

First step: A silica source and a template are mixed in the presence of a solvent to obtain a mixture of the solvent and a solid containing a porous silica material and the template.

Second step: The solvent is removed from the mixture obtained in the first step to obtain the solid containing the porous silica material and the template.

Third step: The template is extracted from the solid obtained in the second step with an extraction solvent to obtain the porous silica material.

<First Step>

In the first step, a silica source and a template are mixed in the presence of a solvent to obtain a mixture of the solvent and a solid containing a porous silica material and the template.

Examples of the silica source include silicon-containing inorganic compounds.

Examples of the silicon-containing inorganic compounds include silicates and compounds containing silicon other than silicates.

Examples of the silicates include layered silicates and non-layered silicates. Examples of the layered silicates include kanemite ($NaHSi_2O_5 \cdot 3H_2O$), sodium disilicate crystal ($Na_2Si_2O_5$), makatite ($NaHSi_4O_9 \cdot 5H_2O$), ilerite ($NaHSi_8O_{17} \cdot XH_2O$), magadiite ($Na_2HSi_{14}O_{29} \cdot XH_2O$), and kenyaite ($Na_2HSi_{20}O_{41} \cdot XH_2O$). Examples of the non-layered silicates include liquid glass (sodium silicate), glass, amorphous sodium silicate, and silicon alkoxides. Examples of the silicon alkoxides include tetraethoxysilane, tetramethoxysilane, tetramethylammonium silicate, and tetraethylorthosilicate.

Examples of the compounds containing silicon other than silicates include silica and silica-metal composite oxides.

The silica source may be used independently, or two or more kinds of silica sources may be used in combination.

The template represents a substance that forms a pore structure in silica.

Examples of the template include a salt containing the quaternary ammonium ion represented by the following Formula (I) and an amine represented by the following Formula (II).

$$[NR^1R^2R^3R^4]^+ \qquad (I)$$

(In Formula (I), $R^1$ represents a linear or branched $C_{7-36}$ hydrocarbon group, and $R^2$ to $R^4$ each independently represent a $C_{1-6}$ hydrocarbon group.)

$$NR^5R^6R^7 \qquad (II)$$

(In Formula (II), $R^5$ represents a linear or branched $C_{8-36}$ hydrocarbon group, and $R^6$ and $R^7$ each independently represent a hydrogen atom or a $C_{1-6}$ hydrocarbon group.)

In Formula (I), $R^1$ represents a linear or branched $C_{7-36}$ hydrocarbon group, and preferably a linear or branched $C_{10-22}$ hydrocarbon group. An example of the hydrocarbon group represented by $R^1$ includes an alkyl group. $R^2$ to $R^4$ each independently represent a $C_{1-6}$ alkyl group, and preferably a methyl group.

Specific examples of the quaternary ammonium ion represented by Formula (I) include cations such as decyltrimethylammonium, dodecyltrimethylammonium, hexadecyltrimethylammonium, octadecyltrimethylammonium, eicosyltrimethylammonium, behenyltrimethylammonium, benzyltrimethylammonium, dimethyldidodecylammonium, and hexadecylpyridinium.

Specific examples of the salt containing the quaternary ammonium ion represented by Formula (I) include decyltrimethylammonium hydroxide, decyltrimethylammonium chloride, decyltrimethylammonium bromide, decyltrimethylammonium ionide, dodecyltrimethylammonium hydroxide, dodecyltrimethylammonium chloride, dodecyltrimethylammonium bromide, dodecyltrimethylammonium ionide, hexadecyltrimethylammonium hydroxide, hexadecyltrimethylammonium chloride, hexadecyltrimethylammonium bromide, hexadecyltrimethylammonium ionide, octadecyltrimethylammonium hydroxide, octadecyltrimethylammonium chloride, octadecyltrimethylammonium bromide, octadecyltrimethylammonium ionide, eicosyltrimethylammonium hydroxide, eicosyltrimethylammonium chloride, eicosyltrimethylammonium bromide, eicosyltrimethylammonium ionide, behenyltrimethylammonium hydroxide, behenyltrimethylammonium chloride, behenyltrimethylammonium bromide, behenyltrimethylammonium ionide, and dimethyldialkylammonium salt and methyltrialkylammonium salt in which at least one methyl group in the aforementioned salts containing a quaternary ammonium ion is substituted with a $C_{2-6}$ alkyl group.

The salt containing the quaternary ammonium ion represented by Formula (I) may be used independently, or two or more kinds of salts may be used in combination.

In Formula (II), $R^5$ represents a linear or branched $C_{8-36}$ hydrocarbon group, and preferably a linear or branched $C_{10-20}$ hydrocarbon group. An example of the hydrocarbon group represented by $R^5$ includes an alkyl group. $R^6$ and $R^7$ each independently represent a hydrogen atom or a $C_{1-6}$ alkyl group, and preferably a hydrogen atom.

Specific examples of the amine represented by Formula (II) include octylamine, nonylamine, decylamine, undecylamine, dodecylamine, tridecylamine, tetradecylamine, pentadecylamine, hexadecylamine, heptadecylamine, octadecylamine, nonadecylamine, eicosylamine, and methylalkylamine and dimethylalkylamine in which at least one hydrogen atom in the aforementioned amines is substituted with a methyl group.

The amine represented by Formula (II) may be used independently, or two or more kinds of amines may be used in combination.

An amount of the template relative to the silica source is preferably 0.01 to 2 in molar ratio.

The solvent used in the first step may be any solvent that dissolves the silica source and the template. Examples of the solvent include water, alcohols, and mixtures thereof. Examples of the alcohols include methanol, ethanol, n-propanol, 2-propanol, n-butanol, sec-butanol, tert-butanol, vinyl alcohol, allyl alcohol, cyclohexanol, benzyl alcohol, ethylene glycol, 1,2-propanediol, 1,3-propanediol, and 1,4-butanediol.

In the first step, the silica source and the template are mixed in the presence of the solvent, typically, at a temperature of -30 to 100 degrees C. Mixing the silica source and the template in the presence of the solvent leads to production of the solid containing the porous silica material and the template. To make the produced solid grow more, the solid may be aged at 0 to 200 degrees C in the solvent. The aging time is typically 180 hours or less. When the solid is to be heated at the time of aging, it is preferable to seal the solid in a pressure tight case to avoid vaporization of the solvent.

<Second Step>

In the second step, the solvent from the mixture obtained in the first step is removed to obtain the solid containing the porous silica material and the template.

Examples of a method for removing the solvent from the mixture obtained in the first step include filtration and decantation.

The solid containing the porous silica material and the template obtained in the second step may be subjected to, for example, acid treatment, base treatment, and silylation in order to control adsorption performance of gas such as organic gas and inorganic gas of the porous silica material. Examples of acids used for the acid treatment include inorganic acids and organic acids such as acetic acid. Examples of bases used for the base treatment include aqueous solutions containing alkali metal compounds, alkaline earth metal compounds, magnesium compounds, and ammonia and also includes solutions containing amines. An acid, base, and silylation agent used for these treatments may remain in the porous silica material. However, in order to maintain the structure of the porous silica material, the total amount of acid, base, and silylation agent relative to the porous silica material is preferably 0.5 wt% or less.

<Third Step>

In the third step, the template from the solid obtained in the second step is extracted using an extraction solvent to obtain the porous silica material.

Examples of the extraction solvent used in the third step includes a liquid and a supercritical fluid that dissolve the template. Examples of the liquid used as the extraction solvent in the third step include $C_{1-12}$ oxa-substituted hydrocarbons and/or oxo-substituted hydrocarbons which are liquid at room temperature. Preferable examples of the liquid are alcohols, ketones, ethers, and esters. Examples of the alcohols include methanol, ethanol, ethylene glycol, propylene glycol, isopropanol, n-butanol, and octanol. Examples of the ketones include acetone, diethyl ketone, methyl ethyl ketone, and methyl isobutyl ketone. Examples of the ethers include acyclic ethers and cyclic ethers. Examples of the acyclic ethers include diisobutyl ether. Examples of the cyclic ether include tetrahydrofuran. Examples of the esters include methyl acetate, ethyl acetate, butyl acetate, and butyl propionate. A mixed liquid of water and these alcohols, ketones, ethers, or esters may be used as the extraction solvent.

As a method for extracting the template with a liquid extraction solvent, for example, the solid obtained in the second step is mixed with a liquid, and then, the liquid phase portion is separated by filtration or decantation. Alternatively, a container such as a column is filled with the solid obtained in the second step, and then, a liquid is flown into the container. After mixing the solid and liquid obtained in the second step, when the liquid phase portion is to be separated by filtration or decantation, the mixing of the solid and liquid and the separation of the liquid phase portion may be repeated several times.

The time to end the third step is determined, for example, by analyzing the liquid phase portion to obtain an amount of the template in the liquid phase portion and by comparing the amount with an amount of the template used in the first step. The temperature of the third step using the liquid extraction solvent is preferably 0 to 200 degrees C, and more preferably 20 to 100 degrees C. When the boiling point of the liquid is low, the liquid may be extracted under pressure.

In the third step, a weight ratio of the liquid extraction solvent to the solid containing the porous silica material and the template obtained in the second step is typically 1 to 1000, and preferably 5 to 300.

In order to improve the extraction effect, an acid or a salt thereof may be added to the liquid extraction solvent. Examples of the acid include inorganic acids such as hydrochloric acid, sulfuric acid, nitric acid, and bromic acid and also include organic acids such as formic acid, acetic acid, and propionic acid. Examples of salts of those acids include alkali metal salt, alkaline earth metal salt, and ammonium salt. A concentration of the acid or the salt thereof in the liquid is preferably 10 mol/l or less, and more preferably 5 mol/l or less.

When the template is extracted with a supercritical fluid, carbon dioxide is preferably used as the supercritical fluid. Since the critical temperature of carbon dioxide is approximately 31 degrees C or higher, the extraction temperature is preferably 31 to 100 degrees C, and more preferably 35 to 60 degrees C. Since the critical pressure of carbon dioxide is about 74 kg/cm$^2$, the extraction pressure is preferably 100 to 300 kg/cm$^2$. For 1 liter of the solid obtained in the second step, it is preferable to use 50 to 500 g of supercritical carbon dioxide per minute for the extraction of the template, and the extraction time is preferably 4 to 20 hours.

The porous silica material obtained in the third step may be subjected to, for example, acid treatment, base treatment, and silylation in order to control adsorption performance of gas such as organic gas and inorganic gas. An acid used for the acid treatment and a base used for the base treatment are similar to the acid used for the acid treatment and the base used for the base treatment performed on the solid containing the porous silica material and the template obtained in the second step. An acid, base, and silylation agent used for these treatments may remain in the porous silica material. However, in order to maintain the structure of the porous silica material, the total amount of acid, base, and silylation agent relative to the porous silica material is preferably 0.5 wt% or less.

The porous silica material obtained in the third step may be further heated at a temperature of 400 degrees C or higher in an oxygen-containing gas atmosphere.

Examples of the oxygen-containing gas include air and oxygen, and a preferable example is air. The oxygen-containing gas may include, for example, water vapor, nitrogen, carbon dioxide, argon, and helium. The porous silica material is heated at a temperature of 400 degrees C or higher, preferably 450 to 900 degrees C, and more preferably 500 to 700 degrees C. From a viewpoint of reinforcement of structure of the porous silica material, the porous silica material is preferably heated at a temperature of 400 degrees C or higher in an oxygen-containing gas atmosphere in which oxygen is supplied 20 to 20000 times and more preferably 100 to 2000 times the volume of the porous silica material obtained in the third step.

The porous silica material after heating may be subjected to, for example, acid treatment, base treatment, and silylation in order to control adsorption performance of gas such as organic gas and inorganic gas. An acid used for the acid treatment and a base used for the base treatment are similar to the acid used for the acid treatment and the base used for the base treatment performed on the solid containing the porous silica material and the template obtained in the second step. An acid, base, and silylation agent used for these treatments may remain in the porous silica material. However, in order to maintain the structure of the porous silica material, the total amount of acid, base, and silylation agent relative to the porous silica material is preferably 0.5 wt% or less.

The porous silica material included in the humidity conditioning material according to this embodiment may contain atoms other than silicon and oxygen. Examples of the atoms other than silicon and oxygen include aluminum atom, phosphorus atom, gallium atom, boron atom, vanadium atom, titanium atom, zirconium atom, copper atom, sodium atom, potassium atom, iron atom, calcium atom, barium atom, lithium atom, and magnesium atom. Among these atoms, titanium atom or zirconium atom is preferable, and titanium atom is more preferable from a viewpoint of stabilizing the mesoporous structure of the porous silica material. The porous silica material typically contains titanium atom or zirconium atom in an amount of 0.1 to 5 wt%.

When the porous silica material contained in the humidity conditioning material according to this embodiment contains a titanium atom, the porous silica material is obtained by a production method including the following first step, second step, and third step.

First step: A titanium source, a silica source, and a template are mixed in the presence of a solvent to obtain a mixture of the solvent and a solid containing a titanium-containing porous silica material the template.

Second step: The solvent is removed from the mixture obtained in the first step to obtain the solid containing the titanium-containing porous silica material and the template.

Third step: The template is extracted from the solid obtained in the second step with an extraction solvent to obtain the titanium-containing porous silica material.

Examples of the titanium source include titanium alkoxides and titanium halides. Examples of the titanium alkoxides include tetramethyl titanate, tetraethyl titanate, tetrapropyl titanate, tetraisopropyl titanate, tetrabutyl titanate, tetraisobutyl titanate, tetra-2-ethylhexyl titanate, tetraoctadecyl titanate, titanium (IV) oxyacetylacetonate, and titanium (IV) diisipropoxybisacetylacetonate. Examples of the titanium halides include titanium tetrachloride, titanium tetrabromide, and titanium tetraiodide.

In the first step, an amount of the titanium source relative to the silica source is preferably 0.00001 to 1, and more preferably 0.00008 to 0.4 in molar ratio.

In an X-ray diffraction pattern, the porous silica material preferably has no peak indicating an interplanar spacing d. The peak indicating the interplanar spacing d refers to a peak derived from the crystallinity or regularity of a solid and the porous silica material may include a broad peak derived from an amorphous portion.

As a method for preparing a porous silica material having no peak indicating an interplanar spacing d in an X-ray diffraction pattern, in the first step, for example, alkoxysilane is used as a silica source, an alcohol corresponding to the alkoxy group of the alkoxysilane serving as the silica source or an alcohol having a physical property equivalent to the alcohol is used as a solvent, and the number of moles added in the alcohol is equal to or more than the number of moles added in the silica source.

The X-ray diffraction pattern of the porous silica material is measured with an X-ray diffractometer (for example, MiniFlex II, manufactured by Rigaku Corporation).

In the humidity conditioning material according to this embodiment, the porous silica material is typically used in the form of powder. The preferable range of the average particle diameter of the powdery porous silica material is as described above. Pulverization of the porous silica material obtained by the aforementioned method produces a powdery porous silica material. The porous silica material is pulverized with a pulverizer such as a roller mill, a jet mill, a pin mill, a hammer mill, a rotary mill, a vibration mill, a planetary mill, and a bead mill.

[Carrier]

The carrier is not particularly limited in material and shape as long as the carrier is a substance that holds the porous silica material. Examples of the substance include a fibrous sheet and a structure including the fibrous sheet. Examples of the shape of the structure include plate fin, corrugated fin, and cylindrical or columnar honeycomb rotor having a large number of cells.

Examples of fibers included in the fibrous sheet include inorganic fibers and organic fibers.

Examples of the inorganic fibers include ceramic fibers, glass fibers, carbon fibers, mineral fibers, and metallic fibers. Examples of components included in the ceramic fibers include silica and alumina. Examples of components included in the mineral fibers include fibrous clay minerals. Examples of metals included in the metallic fibers include Fe, Cu, Al, Cr, and Ni.

Examples of the organic fibers include chemical fibers, organosilicon fibers, and natural fibers. Examples of the chemical fibers include fibers of acrylic, polyethylene, polypropylene, polyurethane, polyclar, nylon, rayon, vinylon, vinylidene, polyvinyl chloride, acetate, and polyester. Examples of components included in the organosilicon fibers include organosilicon polymers. Examples of the natural fibers include cellulose, silk, and cotton.

[Humidity Conditioning Material]

The humidity conditioning material according to an embodiment of the present invention includes a porous silica material having an average pore diameter of 1 nm or more and a carrier. The humidity conditioning material contains an alkali metal element in an amount of 0.001 wt% or more and less than 1.0 wt% (note that the amount of humidity conditioning material is 100 wt%).

The humidity conditioning material preferably contains the alkali metal element in an amount of 0.006 wt% to 0.8 wt%, more preferably 0.01 wt% to 0.8 wt%, still more preferably 0.03 wt% to 0.8 wt%, still more preferably 0.07 wt% to 0.8 wt%, and still more preferably 0.1 wt% to 0.8 wt%. From a viewpoint of mechanical strength of the humidity conditioning material according to this embodiment, the humidity conditioning material preferably contains the alkali metal element in an amount of 0.006 wt% or more.

The alkali metal element in the humidity conditioning material is derived from the porous silica material, the carrier, a binder, a water-soluble polymer, and other components contained in the humidity conditioning material, and components in a slurry used for the production of the humidity conditioning material (such as a dispersion medium). An amount of alkali metal element in the humidity conditioning material is the total amount of alkali metal element in the humidity conditioning material.

The alkali metal element in the humidity conditioning material is preferably sodium and/or potassium.

In this description, the "amount of alkali metal element" in the humidity conditioning material indicates the total amount of alkali metal element derived from a single alkali metal element, an alkali metal compound, and an alkali metal ion in the humidity conditioning material, and the amount is determined by ICP emission spectroscopy or ICP mass spectrometry.

An amount of alkali metal element in the humidity conditioning material is estimated by the following Formula (1) or Formula (2).

A method for producing a humidity conditioning material according to this embodiment will hereinafter be described. When Step (4) is not included in the method for producing a humidity conditioning material according to this embodiment, an amount of alkali metal element in the humidity conditioning material is estimated by Formula (1). When Step (4) is included in the method for producing a humidity conditioning material according to this embodiment, an amount of alkali metal element in the humidity conditioning material is estimated by Formula (2).

In regard to a raw material used for producing the humidity conditioning material according to this embodiment,

A1, A2,... Am (g) represent an amount of component which is to be a solid in the slurry such as the porous silica material and the binder,
B1, B2,... Bm (wt%) represent an amount of alkali metal element in the component which is to be a solid in the slurry,
C1, C2,... Cn (g) represent an amount of component dissolved in the dispersion medium in the slurry such as the water-soluble polymer,
D1, D2... Dn (wt%) represent an amount of alkali metal element in the component dissolved in the dispersion medium in the slurry,
E (g) represents a weight of the dispersion medium,
F (wt%) represents an amount of alkali metal element in the dispersion medium,
G (g) represents a weight of the carrier,
H (wt%) represents an amount of alkali metal element in the carrier,
I (g) represents a weight of the humidity conditioning material after applying the slurry to the carrier and before drying,
J (g) represents a weight of the humidity conditioning material yielded by the production method without Step (4),
K (g) represents a weight of the humidity conditioning material yielded by the production method including Step (4), and
L (g) represents a weight of the carrier after treating only the carrier at a temperature of 300 degrees C or higher.

Here, m and n each independently represent an integer of 1 or more.

Amount of Alkali Metal Element (wt%) in Humidity Conditioning Material Yielded Without Step (4)

$$= \left\{ (J-G) \sum_{p=1}^{m} (A_p B_p / X) + (J-I) \left[ \sum_{q=1}^{n} (C_q D_q / Y) + EF/Y \right] + GH \right\} / J$$

$$\cdots \quad (1)$$

Note that

$$X = \sum_{p=1}^{m} A_p + \sum_{q=1}^{n} C_q$$

$$Y = \sum_{q=1}^{n} C_q + E$$

Amount of Alkali Metal Element (wt%) in Humidity Conditioning Material Yielded By Step (4)

$$= \left\{ (K-L) \sum_{p=1}^{m} (A_p B_p / X') + (J-I) \left[ \sum_{q=1}^{n} (C_q D_q / Y) + EF/Y \right] + GH \right\} / K$$

$$\cdots \quad (2)$$

Note that

$$X' = \sum_{p=1}^{m} Ap$$

$$Y = \sum_{q=1}^{n} Cq + E$$

To adjust an amount of alkali metal element in the humidity conditioning material to 0.001 wt% or more and less than 1.0 wt%, for example, the type and amount of raw material used for the production of the humidity conditioning material are adjusted so that an amount of alkali metal element estimated by Formula (1) or (2) becomes 0.001 wt% or more and less than 1.0 wt%. Alternatively, as described later, an amount of alkali metal element relative to a solid content weight of the slurry is adjusted from 0.001 wt% to 1 wt%.

In the humidity conditioning material according to this embodiment, an amount of porous silica material per 100 parts by weight of the carrier is not particularly limited, but preferably the amount is 30 parts by weight to 500 parts by weight, and more preferably 50 parts by weight to 300 parts by weight.

In the humidity conditioning material according to this embodiment, the total amount of the whole components supported on 100 parts by weight of the carrier is not particularly limited, but preferably the amount is 30 parts by weight to 500 parts by weight, and more preferably 50 parts by weight to 300 parts by weight.

When the method for producing a humidity conditioning material according to this embodiment does not include Step (4), the total amount of the whole components supported on 100 parts by weight of the carrier (the total amount may hereinafter be described as "Z", the unit is parts by weight) is calculated by the following Formula (3).

When the method for producing a humidity conditioning material according to this embodiment includes Step (4), the total amount of the whole components supported on 100 parts by weight of the carrier (the total amount may hereinafter be described as "Z", the unit is parts by weight) is calculated by the following Formula (4).

$$Z \text{ (parts by weight)} = 100 \ (J - G)/G \ (3)$$

G: Weight of carrier (g)
J: Weight (g) of humidity conditioning material yielded by production method without Step (4)

$$Z' \text{ (parts by weight)} = 100 \ (K - L)/L \ (4)$$

L: Weight (g) of carrier after treating only carrier at temperature of 300 degrees C or higher
K: Weight (g) of humidity conditioning material yielded by production method including Step (4)

[Binder]

The humidity conditioning material according to this embodiment may further include a binder so that the carrier holds the porous silica material more firmly. Examples of the binder include inorganic binder and organic binder.

Examples of the inorganic binder include silica particle, alumina particle, and titania particle. The silica particle serving as an inorganic binder is a silica particle other than the porous silica material.

From a viewpoint of amount of moisture adsorbed and desorbed in the humidity conditioning material according to this embodiment, the inorganic binder preferably has an average particle diameter 2 times or more (typically 2.0 times or more) the average pore diameter of the porous silica material, more preferably 3 times or more (typically 3.0 times or more), and still more preferably 4 times or more (typically 4.0 times or more). The upper limit of average particle diameter of the inorganic binder is not particularly limited. However, in the method for producing a humidity conditioning material according to this embodiment which is to be described, the upper limit is preferably 200 nm or less, more preferably 50 nm or less, still more preferably 25 nm or less, and still more preferably 15 nm or less from a viewpoint of dispersibility of the inorganic binder in the slurry. The average particle diameter of the inorganic binder is typically smaller than the average particle diameter of the porous silica material. The average particle diameter of the inorganic binder is measured, for example, by dynamic light scattering (for example, UPA-EX150, manufactured by Nikkiso Co., Ltd.) on a volumetric basis under the following conditions: water is used as a dispersion medium, a refractive index of a sample is 1.81, and a refractive index of the dispersion medium is 1.33.

From a viewpoint of amount of moisture absorbed in the humidity conditioning material according to this embodiment, the inorganic binder preferably has an average particle diameter 2.0 times or more and 50 times or less the average pore diameter of the porous silica material, preferably 2.0 times or more and 15 times or less, and more preferably 2.0 times or more and 7.0 times or less.

Examples of the organic binder include hydrophobic organic polymers.

The hydrophobic organic polymers are not particularly limited as long as they do not dissolve in water. The hydrophobic organic polymers are preferably one or more hydrophobic organic polymers selected from the group consisting of (meth)acrylate ester resin, vinyl acetate resin, ethylene-vinyl ester copolymer resin, vinyl acetate-(meth)acrylate copolymer resin, epoxy resin, phenol resin, polyimide resin, polyester resin, fluororesin, and polycarbonate resin. More preferably, the hydrophobic organic polymers are one or more hydrophobic organic polymers selected from the group consisting of (meth)acrylate ester resin, ethylene-vinyl ester copolymer resin, and epoxy resin.

The (meth)acrylate ester resin may be a copolymer having two or more structural units based on (meth)acrylate ester. Examples of the ethylene-vinyl ester copolymer resin include ethylene-vinyl acetate copolymer resin and ethylene-vinyl acetate-(meth)acrylate ester copolymer resin. The ethylene-vinyl ester copolymer resin may have two or more kinds of structural units based on vinyl ester.

[Water-soluble Polymer]

The humidity conditioning material according to this embodiment may further include a water-soluble polymer. Examples of the water-soluble polymer include sodium polyacrylate, sodium alginate, and cellulose ether. As described below, the water-soluble polymer is typically derived from components in the slurry used when producing the humidity conditioning material.

[Other Components]

The humidity conditioning material according to this embodiment may further contain an acid and/or a base. Examples of the acid include inorganic acids and organic acids. Examples of the inorganic acids include hydrochloric acid and phosphoric acid. Examples of the organic acids include acetic acid. Examples of the base include sodium hydroxide, potassium hydroxide, sodium acetate, potassium acetate, sodium carbonate, potassium carbonate, and ammonia.

The humidity conditioning material according to this embodiment adsorbs water vapor in air. Furthermore, the moisture adsorbed in the humidity conditioning material is desorbed when the humidity conditioning material comes into contact with air having a low humidity.

[Method for Producing Humidity Conditioning Material]

An example of the method for producing a humidity conditioning material include a method including the following Step (1'), Step (2'), and Step (3').

Step (1'): A dispersion medium is mixed with a porous silica material having an average pore diameter of 1 nm or more to obtain a slurry.
Step (2'): The slurry obtained in the Step (1') is applied to a carrier.
Step (3'): The dispersion medium is removed from the carrier coated with the slurry obtained in Step (2') to yield a humidity conditioning material containing the porous silica material and the carrier.

A method for adjusting an amount of alkali metal element in the humidity conditioning material to 0.001 wt% or more and less than 1.0 wt% specifically includes the following Step (1), Step (2), and Step (3).

Step (1): A dispersion medium is mixed with a porous silica material having an average pore diameter of 1 nm or more to obtain a slurry, and an amount of alkali metal element in the slurry is adjusted to be 0.001 wt% to 1 wt% relative to a solid content weight therein.
Step (2): The slurry obtained in Step (1) is applied to a carrier.
Step (3): The dispersion medium is removed from the carrier coated with the slurry obtained in Step (2) to yield a humidity conditioning material containing the porous silica material and the carrier.

<Step (1)>

The slurry obtained in Step (1) contains the porous silica material having an average pore diameter of 1 nm or more and the dispersion medium.

The porous silica material in the slurry is similar to the porous silica material in the humidity conditioning material according to this embodiment.

The dispersion medium is one or more types of dispersion media selected from the group consisting of water and organic solvents. An example of the organic solvents includes alcohol. The dispersion medium is preferably water. To adjust an amount of alkali metal element to be 0.001 wt% or more and less than 1.0 wt% relative to a solid content weight of the slurry, it is more preferable that the dispersion medium should be ion-exchanged water.

The slurry may include a water-soluble polymer. Examples of the water-soluble polymer include sodium polyacrylate, sodium alginate, and cellulose ether. Water-soluble polymers are typically used to adjust the viscosity of a slurry.

The slurry may include an acid and/or a base. The acid and the base are similar to the acid and the base that may be included in the humidity conditioning material according to this embodiment. Acids and bases are typically used to adjust the pH of a slurry.

The slurry may include the aforementioned binder. Examples of an inorganic binder source include silica sol, alumina sol, and titania sol.

From a viewpoint of productivity of the humidity conditioning material according to this embodiment, the solid content in the slurry is preferably 5 to 50 wt%, and more preferably 10 to 30 wt% (note that an amount of the slurry is 100 wt%).

In this description, the "solid" in the slurry indicates a component insoluble in the dispersion medium among the components contained in the slurry. When the dispersion medium is water, examples of the water-insoluble component include porous silica materials, hydrophobic organic polymers, silica particles, and alumina particles. The solid content in the slurry is the total weight of components insoluble in the dispersion medium among the components contained in the slurry (note that the total amount of the slurry is 100 wt%).

The solid content in the slurry is calculated by the following Formula (5) in which

A1, A2,... Am (g) represent an amount of component which is to be a solid in the slurry such as the porous silica material and the binder,

C1, C2,... Cn (g) represent an amount of component dissolved in the dispersion medium in the slurry such as the water-soluble polymer, and

E (g) represents a weight of the dispersion medium.

Here, m and n each independently represent an integer of 1 or more.

$$\text{Solid content in the slurry (wt\%)} = 100 \sum_{p=1}^{m} Ap \Big/ \Big( \sum_{p=1}^{m} Ap + \sum_{q=1}^{n} Cq + E \Big) \quad \cdots (5)$$

An amount of alkali metal element relative to a solid content weight of the slurry is preferably 0.001 wt% to 1 wt%, more preferably 0.006 wt% to 0.8 wt%, still more preferably 0.01 wt% to 0.8 wt%, still more preferably 0.03 wt% to 0.8 wt%, still more preferably 0.07 wt% to 0.8 wt%, and still more preferably 0.1 wt% to 0.8 wt%.

The alkali metal element in the slurry is derived from the porous silica material, the dispersion medium, and other components contained in the slurry. An amount of alkali metal element in the slurry is the total amount of alkali metal element in the slurry.

An amount of alkali metal element in the slurry is measured similarly to an amount of alkali metal element in the humidity conditioning material according to this embodiment.

The alkali metal element in the slurry is preferably sodium and/or potassium.

The viscosity of the slurry is not particularly limited but is preferably 1 to 100 cps when measured by a B-type viscometer.

The pH of the slurry is not particularly limited but is preferably pH 2 to 10, more preferably pH 4 to 9, and still more preferably pH 6 to 8.

In a case where the slurry contains a porous silica material, a hydrophobic organic polymer, a silica sol, and an alumina sol, a mixing ratio of solids in the slurry is not particularly limited. However, it is preferable that hydrophobic organic polymer : silica sol : alumina sol : porous silica material = 0 to 5 : 0 to 5 : 0 to 5 : 1 to 20 in solid content.

The slurry is obtained by mixing the porous silica material and the dispersion medium. In a case where the slurry contains a component other than the porous silica material and the dispersion medium, as a method for producing the slurry, for example, a component other than the porous silica material and the dispersion medium is mixed with the dispersion medium to obtain a slurry precursor, and then, the porous silica material is mixed with the obtained slurry precursor to obtain a slurry.

As an example of a method for adjusting an amount of alkali metal element to 0.001 wt% to 1 wt% relative to a solid content weight of the slurry, the method involves:

analyzing an amount of alkali metal element in a raw material used for the production of the slurry;
calculating, from the amount of alkali metal element in the raw material and an amount of the raw material, an amount of alkali metal element relative to a solid content weight of the resulting slurry (hereinafter, the amount of alkali metal element is described as "$\alpha$ (unit: wt%)") to adjust the type and amount of the raw material so that $\alpha$ becomes 0.001 wt% to 1 wt%; and
mixing the raw material in which $\alpha$ is adjusted to 0.001 wt% to 1 wt%.

From the amount of alkali metal element in the raw material and the amount of the raw material, the amount $\alpha$ of alkali metal element relative to a solid content weight in the obtained slurry is specifically obtained in the following manner.

The raw material used for producing the slurry is calculated by the following Formula (6) in which

A1, A2,... Am (g) represent an amount of component which is to be a solid in the slurry,
B1, B2,... Bm (wt%) represent an amount of alkali metal element in the component which is to be a solid in the slurry,
C1, C2,... Cn (g) represent an amount of component dissolved in the dispersion medium in the slurry,
D1, D2... Dn (wt%) represent an amount of alkali metal element in the component dissolved in the dispersion medium in the slurry,
E (g) represents a weight of the dispersion medium, and
F (wt%) represents an amount of alkali metal element in the dispersion medium.

Here, m and n each independently represent an integer of 1 or more.

$$ \alpha = \left( \sum_{p=1}^{m} ApBp + \sum_{q=1}^{n} CqDq + \sum_{p=1}^{m} EF \right) \Big/ \sum_{p=1}^{m} Ap \qquad \cdots (6) $$

When the calculated $\alpha$ is over 1 wt%, $\alpha$ can be adjusted to 0.001 wt% to 1 wt%, for example, by replacing a component having a large amount of alkali metal element in the raw material used for the production of the slurry with a component having a small amount of alkali metal element. Alternatively, a component having a large amount of alkali metal element in the raw material used for the production of the slurry may be washed with ion-exchanged water, or the obtained slurry may be diluted with ion-exchanged water.

When the calculated $\alpha$ is less than 0.001 wt%, $\alpha$ can be adjusted to 0.001 wt% to 1 wt%, for example, by replacing a component having a small amount of alkali metal element in the raw material used for the production of the slurry with a component having a large amount of alkali metal element. Alternatively, a component having a relatively large amount of alkali metal element in the raw material used for the production of the slurry may be increased.

As another example of the method for adjusting an amount of alkali metal element to 0.001 wt% to 1 wt% relative to a solid content weight of the slurry, a porous silica material having an average pore diameter of 1 nm or more is mixed with a dispersion medium to obtain a slurry, and then, an amount of alkali metal element relative to a solid content weight in the obtained slurry is measured, and when the measured amount of alkali metal element is 0.001 wt% to 1 wt%, Step (2) is performed.

In this method, when the measured amount of alkali metal element is over 1 wt%, the slurry is prepared again, and an amount of alkali metal element relative to a solid content weight of the re-prepared slurry is measured, for example, by replacing a component having a large amount of alkali metal element in the raw material used for the production of the slurry with a component having a small amount of alkali metal element. Alternatively, a component with a large amount of alkali metal element in the raw material used for the production of the slurry may be washed with ion-exchanged water, or the obtained slurry may be diluted with ion-exchanged water. This re-preparation is repeated until the measured amount of alkali metal element becomes 0.001 wt% to 1 wt%.

In this method, when the measured amount of alkali metal element is less than 0.001 wt%, the slurry is prepared again, and an amount of alkali metal element relative to a solid content weight of the re-prepared slurry is measured, for example, by replacing a component having a small amount of alkali metal element with a component having a large amount of alkali metal element. Alternatively, a component with a relatively large amount of alkali metal element in the raw material used for the production of the slurry may be increased, or the obtained slurry may be diluted with ion-exchanged water. This re-preparation is repeated until the measured amount of alkali metal element becomes 0.001 wt% to 1 wt%.

<Step (2)>

In Step (2), a method for applying the slurry to the carrier is not particularly limited. Examples of the method include dip-coating of the carrier in the slurry, spray coating, roll coating, screen printing, pad printing, and offset printing of the slurry to the carrier.

<Step (3)>

As a method for removing the dispersion medium from the carrier coated with the slurry in Step (3), for example, the carrier coated with the slurry is dried at 80 degrees C to 150 degrees C. Before drying the carrier coated with the slurry at 80 to 150 degrees C, air may be blown into the slurry-coated carrier.

Step (2) and Step (3) may be performed once to produce the humidity conditioning material according to this embodiment. However, from a viewpoint of increasing an amount of slurry applied, it is preferable to repeat Step (2) and Step (3) two or more times.

<Step (4)>

The method for producing a humidity conditioning material according to the present invention may further include the following Step (4) after Step (3).

Step (4): The humidity conditioning material yielded in Step (3) is heated at a temperature of 300 degrees C or higher.

Step (4) enhances the adhesive strength between the carrier and the solid (porous silica material) in the slurry applied to the carrier. From a viewpoint of adhesive strength, the heating temperature is preferably 400 degrees C or higher, and more preferably 500 degrees C or higher. Step (4) may be performed in an oxygen-containing gas atmosphere such as air, or may be performed in a non-oxygen-containing gas atmosphere such as nitrogen gas. When performing Step (4), the carrier contained in the humidity conditioning material according to this embodiment preferably contains ceramic fibers, glass fibers, or metal fibers.

A humidity control device including the humidity conditioning material according to this embodiment enables adsorption and desorption of water vapor in air. Examples of the humidity control device include an air conditioner, a dehumidifier, an air purifier, and a ventilation system.

The following methods are examples of a method for dehumidifying or humidifying a room by the humidity control device including the humidity conditioning material according to this embodiment.

1) Air outside a room, which is to be treated, is introduced into the humidity conditioning material in the humidity control device, and the moisture in the air to be treated is adsorbed by the porous silica material, whereby obtaining dehumidified air. Supplying the dehumidified air to the room reduces the humidity of air inside the room.

2) Air inside a room, which is to be treated, is introduced into the humidity conditioning material in the humidity control device, and the moisture in the air to be treated is adsorbed by the porous silica material, whereby obtaining dehumidified air. Supplying the dehumidified air to the room reduces the humidity of air inside the room.

3) Air outside a room, which is to be treated, is introduced into the humidity conditioning material in the humidity control device, and the moisture in the air to be treated is adsorbed by the porous silica material. The adsorbed moisture is supplied along with indoor air circulation or outdoor air introduction to increase the humidity of air inside the room.

4) When air inside a room is exhausted to the outside, the air to be treated is introduced into the humidity conditioning material in the humidity control device, and the moisture in the air to be treated is adsorbed by the porous silica material. The adsorbed moisture is supplied along with indoor air circulation or outdoor air introduction to increase the humidity of air inside the room.

EXAMPLES

Hereinafter, the present invention will be described more specifically with reference to Examples, but the present invention is not limited to the following Examples.

Example 1: Production and Evaluation of Humidity Conditioning Material 1

<Production of Porous Silica Material>

First step: While 625.5 g of 16 wt% of hexadecyltrimethylammonium hydroxide aqueous solution was stirred, a mixed aqueous solution containing 9.25 g of tetraisopropyl titanate and 50.0 g of 2-propanol was dropped into the solution at room temperature. The resulting mixture was stirred for 30 minutes, and then, 190.5 g of tetramethyl orthosilicate was dropped into the mixture. To the mixture, 5.0 g of 2-propanol was added, and the resultant was stirred for 3 hours to obtain a precipitate.

Second step: The precipitate obtained in the first step was filtered, and the precipitate was washed with 5 liters of ion-exchanged water. The resulting precipitate was dried under reduced pressure at 100 degrees C for 5 hours to obtain a solid.

Third step: 20 g of the solid obtained in the second step was added to a flask, and then, a mixed aqueous solution containing 200 ml of methanol and 10 g of concentrated hydrochloric acid (36 wt%) was added to the solution. The resulting mixture was stirred and heated at reflux temperature for 1 hour. The resultant was allowed to cool, and then, the aqueous solution was removed by filtration to obtain a solid. A similar operation was repeated for the obtained solid using a mixed aqueous solution containing 200 ml of methanol and 5 g of concentrated hydrochloric acid. The resulting solid was refluxed with 200 ml of methanol for 1 hour, and then, 10 mmHg of the filtered solid was dried under reduced pressure at 120 degrees C for 1.5 hours to obtain a solid.

The solid obtained in the third step was heated at 600 degrees C for 3 hours under air flow to obtain a porous silica material.

The porous silica material obtained was pulverized eight times with a hammer mill to obtain a powdery porous silica material having an average particle diameter of 10 $\mu$m. The average particle diameter was determined by the aforementioned method using the laser diffraction particle size analyzer.

The powdery porous silica material obtained had a specific surface area of 1160 $m^2$/g, a total pore volume of 0.60 cc/g, and an average pore diameter of 2.2 nm. The specific surface area, total pore volume, and average pore diameter of the porous silica material were determined by the aforementioned method after the porous silica material was subjected to vacuum degassing at 120 degrees C for 2 hours.

<Production of Slurry>

In 29 g of ion-exchanged water, 0.4 g of sodium alginate 500-600 (Wako Pure Chemical Industries, Ltd.) serving as a water-soluble polymer was dissolved. To the resultant, 4.0 g of the aforementioned powdery porous silica material was added and mixed to obtain 33.4 g of a slurry (1). The pH of the slurry (1) was about 6. An amount of alkali metal element relative to a solid content weight of the slurry (1) was 1.1 wt%.

<Production of Humidity Conditioning Material>

A glass fiber sheet (1.5 cm $\times$ 5 cm $\times$ 0.24 mm) serving as a carrier was immersed in 33.2 g of the slurry (1) and allowed to stand for 1 minute, and then, the sheet was removed from the slurry (1). The sheet obtained was blown with a dryer until the slurry stopped dropping, and then, dried at 140 degrees C for 2 hours to yield a humidity conditioning material 1. The humidity conditioning material 1 contained the alkali metal element in an amount of 0.45 wt%. Table 1 shows the results.

<Evaluation of Amount of Moisture Absorbed>

The humidity conditioning material 1 was stored for 30 minutes or more in an auto dry desiccator set at room temperature and relative humidity of 0%. A weight of the humidity conditioning material 1 after water desorption (the weight is referred to as "weight 1") was measured. Next, the humidity conditioning material 1 was stored for 30 minutes in a constant temperature and humidity bath set at 25 degrees C and relative humidity of 70%. A weight of the humidity conditioning material 1 after water adsorption (the weight is referred to as "weight 2) was measured. An amount of moisture absorbed obtained by subtracting the weight 1 from the weight 2 was divided by the weight 1 to calculate a weight fraction (unit: wt%) of the amount of moisture absorbed with respect to the humidity conditioning material. The amount of moisture absorbed in the humidity conditioning material 1 was 20 wt%. Table 1 shows the results.

Example 2: Production and Evaluation of Humidity Conditioning Material 2

<Production of Porous Silica Material>

The powdery porous silica material obtained in Example 1 was used.

<Production of Slurry>

In 29.0 g of ion-exchanged water, 0.2 g of sodium alginate 500-600 (Wako Pure Chemical Industries, Ltd.) serving as a water-soluble polymer and 0.06 g of sodium acetate were dissolved. To the resultant, 4.0 g of the porous silica material was added and mixed to obtain 33.3 g of a slurry (2). The pH of the slurry (2) was about 7. An amount of alkali metal element relative to a solid content weight of the slurry (2) was 0.97 wt%

<Production of Humidity Conditioning Material>

A humidity conditioning material 2 was yielded in a similar manner to Example 1 except that the slurry (2) was used. The humidity conditioning material 2 contained the alkali metal element in an amount of 0.51 wt%. Table 1 shows the results.

<Evaluation of Amount of Moisture Absorbed>

An amount of moisture absorbed in the humidity conditioning material 2 was evaluated in a similar manner to Example 1. The amount of moisture absorbed in the humidity conditioning material 2 was 20 wt%. Table 1 shows the results.

Example 3: Production and Evaluation of Humidity Conditioning Material 3

<Production of Porous Silica Material>

The powdery porous silica material obtained in Example 1 was used.

<Production of Slurry>

In 29.0 g of ion-exchanged water, 0.2 g of sodium alginate 500-600 (Wako Pure Chemical Industries, Ltd.) serving as a water-soluble polymer was dissolved. To the resultant, 4.0 g of the porous silica material was added and mixed to obtain 33.2 g of a slurry (3). The pH of the slurry (3) was about 6. An amount of alkali metal element relative to a solid content weight of the slurry (3) was 0.54 wt%

<Production of Humidity Conditioning Material>

A humidity conditioning material 3 was yielded in a similar manner to Example 1 except that the slurry (3) was used, and after drying a sheet for 2 hours at 140 degrees C, the sheet was fired in the atmosphere in a muffle furnace at 600 degrees C for 3 hours (firing time: 1 hour). The humidity conditioning material 3 contained the alkali metal element in an amount of 0.44 wt%. Table 1 shows the results.

<Evaluation of Amount of Moisture Absorbed>

An amount of moisture absorbed in the humidity conditioning material 3 was evaluated in a similar manner to Example 1. The amount of moisture absorbed in the humidity conditioning material 3 was 18 wt%. Table 1 shows the results.

Example 4: Production and Evaluation of Humidity Conditioning Material 4

<Production of Porous Silica Material>

The powdery porous silica material obtained in Example 1 was used.

<Production of Slurry>

To 25.2 g of ion-exchanged water, added was 4.0 g of silica sol (SNOWTEX ST-N-40 (Nissan Chemical Corporation), average particle diameter: from 20 to 25 nm, concentration of solid content: 40 wt%) serving as a binder. To the resultant, 4.0 g of the porous silica material was added and mixed to obtain 33.2 g of a slurry (4). The pH of the slurry (4) was about 6. An amount of alkali metal element relative to a solid content weight of the slurry (4) was 0.093 wt%

<Production of Humidity Conditioning Material>

A humidity conditioning material 4 was yielded in a similar manner to Example 3 except that the slurry (4) was used. The humidity conditioning material 4 contained the alkali metal element in an amount of 0.074 wt%. Table 1 shows the results.

<Evaluation of Amount of Moisture Absorbed>

An amount of moisture absorbed in the humidity conditioning material 4 was evaluated in a similar manner to Example 1. The amount of moisture absorbed in the humidity conditioning material 4 was 18 wt%. Table 1 shows the results.

Example 5: Production and Evaluation of Humidity Conditioning Material 5

<Production of Porous Silica Material>

The powdery porous silica material obtained in Example 1 was used.

<Production of Slurry>

In 28.9 g of ion-exchanged water, 0.4 g of sodium alginate 500-600 (Wako Pure Chemical Industries, Ltd.) serving as a water-soluble polymer was dissolved. To the resultant, 4.0 g of the porous silica material was added and mixed to obtain 33.3 g of a slurry (5). The pH of the slurry (5) was about 6. An amount of alkali metal element relative to a solid content weight of the slurry (5) was 1.1 wt%

<Production of Humidity Conditioning Material>

A humidity conditioning material 5 was yielded in a similar manner to Example 3 except that the slurry (5) was used. The humidity conditioning material 5 contained the alkali metal element in an amount of 0.78 wt%. Table 1 shows the results.

<Evaluation of Amount of Moisture Absorbed>

An amount of moisture absorbed in the humidity conditioning material 5 was evaluated in a similar manner to Example 1. The amount of moisture absorbed in the humidity conditioning material 5 was 12 wt%. Table 1 shows the results.

Example 6: Production and Evaluation of Humidity Conditioning Material 6

<Production of Porous Silica Material>

The powdery porous silica material obtained in Example 1 was used.

<Production of Slurry>

In 29.0 g of ion-exchanged water, 0.2 g of METOLOSE 65SH-4000 (Shin-Etsu Chemical Co., Ltd., water-soluble cellulose ether) serving as a water-soluble polymer was dissolved. To the resultant, 4.0 g of the porous silica material was added and mixed to obtain 33.2 g of slurry (6). The pH of the slurry (6) was about 7. An amount of alkali metal element relative to a solid content weight of the slurry (6) was 0.0039 wt%

<Production of Humidity Conditioning Material>

A humidity conditioning material 6 was yielded in a similar manner to Example 3 except that the slurry (6) was used. The humidity conditioning material 6 contained the alkali metal element in an amount of 0.005 wt%. Table 1 shows the results.

<Evaluation of Amount of Moisture Absorbed>

An amount of moisture absorbed in the humidity conditioning material 6 was evaluated in a similar manner to Example 1. The amount of moisture absorbed in the humidity conditioning material 6 was 18 wt%. Table 1 shows the results.

Example 7: Production and Evaluation of Humidity Conditioning Material 10

<Production of Porous Silica Material>

The powdery porous silica material obtained in Example 1 was used.

<Production of Slurry>

To 21.2 g of ion-exchanged water, added was 8.0 g of silica sol (SNOWTEX ST-N (Nissan Chemical Corporation), average particle diameter: from 10 to 15 nm, concentration of solid content: 20 wt%) serving as a binder. To the resultant, 4.0 g of the porous silica material was added and mixed to obtain 33.2 g of a slurry (10). The pH of the slurry (10) was about 6. An amount of alkali metal element relative to a solid content weight of the slurry (10) was 0.045 wt%

<Production of Humidity Conditioning Material>

A humidity conditioning material 10 was yielded in a similar manner to Example 3 except that the slurry (10) was used. The humidity conditioning material 10 contained the alkali metal element in an amount of 0.026 wt%. Table 1 shows the results.

<Evaluation of Amount of Moisture Absorbed>

An amount of moisture absorbed in the humidity conditioning material 10 was evaluated in a similar manner to Example 1. The amount of moisture absorbed in the humidity conditioning material 10 was 26 wt%. Table 1 shows the results.

Example 8: Production and Evaluation of Humidity Conditioning Material 11

<Production of Porous Silica Material>

The powdery porous silica material obtained in Example 1 was used.

<Production of Slurry>

To 21.2 g of ion-exchanged water, added was 8.0 g of silica sol (SNOWTEX ST-NS (Nissan Chemical Corporation), average particle diameter: from 8 to 11 nm, concentration of solid content: 20 wt%) serving as a binder. To the resultant, 4.0 g of the porous silica material was added and mixed to obtain 33.2 g of a slurry (11). The pH of the slurry (11) was about 6. An amount of alkali metal element relative to a solid content weight of the slurry (11) was 0.031 wt%

<Production of Humidity Conditioning Material>

A humidity conditioning material 11 was yielded in a similar manner to Example 3 except that the slurry (11) was used. The humidity conditioning material 11 contained the alkali metal element in an amount of 0.014 wt%. Table 1 shows the results.

<Evaluation of Amount of Moisture Absorbed>

An amount of moisture absorbed in the humidity conditioning material 11 was evaluated in a similar manner to Example 1. The amount of moisture absorbed in the humidity conditioning material 11 was 25 wt%. Table 1 shows the results.

Example 9: Production and Evaluation of Humidity Conditioning Material 12

<Production of Porous Silica Material>

The powdery porous silica material obtained in Example 1 was used.

<Production of Slurry>

To 18.2 g of ion-exchanged water, added was 11.1 g of silica sol (SNOWTEX ST-NSX (Nissan Chemical Corporation), average particle diameter: from 4 to 6 nm, concentration of solid content: 14 wt%) serving as a binder. To the resultant, 4.0 g of the porous silica material was added and mixed to obtain 33.3 g of a slurry (12). The pH of the slurry (12) was about 6. An amount of alkali metal element relative to a solid content weight of the slurry (12) was 0.028 wt%

<Production of Humidity Conditioning Material>

A humidity conditioning material 12 was yielded in a similar manner to Example 3 except that the slurry (12) was used. The humidity conditioning material 12 contained the alkali metal element in an amount of 0.016 wt%. Table 1 shows the results.

<Evaluation of Amount of Moisture Absorbed>

An amount of moisture absorbed in the humidity conditioning material 12 was evaluated in a similar manner to Example 1. The amount of moisture absorbed in the humidity conditioning material 12 was 27 wt%. Table 1 shows the results.

Comparative Example 1: Production and Evaluation of Humidity Conditioning Material 7

<Production of Porous Silica Material>

The powdery porous silica material obtained in Example 1 was used.

<Production of Slurry>

In 29.0 g of ion-exchanged water, 0.2 g of sodium alginate 500-600 (Wako Pure Chemical Industries, Ltd.) serving as a water-soluble polymer and 0.2 g of sodium acetate were dissolved. To the resultant, 4.0 g of the porous silica material was added and mixed to obtain 33.4 g of a slurry (7). The pH of the slurry (7) was about 7. An amount of alkali metal element relative to a solid content weight of the slurry (7) was 1.9 wt%

<Production of Humidity Conditioning Material>

A humidity conditioning material 7 was yielded in a similar manner to Example 3 except that the slurry (7) was used. The humidity conditioning material 7 contained the alkali metal element in an amount of 1.6 wt%. Table 1 shows the results.

<Evaluation of Amount of Moisture Absorbed>

An amount of moisture absorbed in the humidity conditioning material 7 was evaluated in a similar manner to Example 1. The amount of moisture absorbed in the humidity conditioning material 7 was 7 wt%. Table 1 shows the results.

Comparative Example 2: Production and Evaluation of Humidity Conditioning Material 8

<Production of Porous Silica Material>

The powdery porous silica material obtained in Example 1 was used.

<Production of Slurry>

In 29.0 g of ion-exchanged water, 0.2 g of sodium alginate 500-600 (Wako Pure Chemical Industries, Ltd.) serving as a water-soluble polymer and 0.4 g of sodium acetate were dissolved. To the resultant, 4.0 g of the porous silica material was added and mixed to obtain 33.6 g of a slurry (8). An amount of alkali metal element relative to a solid content weight of the slurry (8) was 3.3 wt%

<Production of Humidity Conditioning Material>

A humidity conditioning material 8 was yielded in a similar manner to Example 3 except that the slurry (8) was used. The humidity conditioning material 8 contained the alkali metal element in an amount of 2.5 wt%. Table 1 shows the results.

<Evaluation of Amount of Moisture Absorbed>

An amount of moisture absorbed in the humidity conditioning material 8 was evaluated in a similar manner to Example 1. The amount of moisture absorbed in the humidity conditioning material 8 was 4 wt%. Table 1 shows the results.

Comparative Example 3: Production and Evaluation of Humidity Conditioning Material 9

<Porous Silica Material>

MIZUKASIEVES Y-500 (MIZUSAWA INDUSTRIAL CHEMICALS, Ltd., sodium Y-type zeolite, $SiO_2$ / $Al_2O_3$ molar ratio = 4.8, average pore diameter = 0.7 to 0.8 nm, average particle diameter (D50%) = 0.9 $\mu$m) was used.

<Production of Slurry>

In 29.0 g of ion-exchanged water, 0.2 g of sodium alginate 500-600 (Wako Pure Chemical Industries, Ltd.) serving as a water-soluble polymer was dissolved. To the resultant, 4.0 g of the porous silica material (MIZUKASIEVES Y-500) was added and mixed to obtain 33.2 g of a slurry (9). An amount of alkali metal element relative to a solid content weight of the slurry (9) was 10.5 wt%.

<Production of Humidity Conditioning Material>

A humidity conditioning material 9 was yielded in a similar manner to Example 1 except that the slurry (9) was used. The humidity conditioning material 9 contained the alkali metal element in an amount of 5.0 wt%. Table 1 shows the results.

<Evaluation of Amount of Moisture Absorbed>

An amount of moisture absorbed in the humidity conditioning material 9 was evaluated in a similar manner to Example 1. The amount of moisture absorbed in the humidity conditioning material 9 was 7 wt%. Table 1 shows the results.

<Evaluation of Mechanical Strength>

The humidity conditioning materials 4, 5, and 6 were each placed on a stainless steel sieve having a diameter of 160 mm, an opening of 1 mm, a wire diameter of 0.56 mm, and then, shaken with an electric sieve ANF-30 (Nitto Kagaku Co., Ltd.) for 15 minutes. A rate (%) of supported components dropped from the humidity conditioning material was calculated by the following Formula (7) or Formula (8). The smaller the rate of supported components dropped from the carrier, the higher the mechanical strength of the humidity conditioning material. Table 1 shows the results.

$$\text{Rate (\%) of supported components dropped from}$$

$$\text{humidity conditioning material} = (U - V)/(U \times Z)... \quad (7)$$

U: Weight (g) of humidity conditioning material before shaking
V: Weight (g) of humidity conditioning material after shaking
Z: Total amount (parts by weight) of all components supported on 100 parts by weight of carrier in humidity conditioning material before shaking

$$\text{Rate (\%) of supported components dropped from}$$

$$\text{humidity conditioning materials 4 to 6 among humidity}$$

$$\text{conditioning materials 3 to 8 and 10 to 12 obtained by Step}$$

$$(4)$$

$$= (U - V)/(U \times Z') \cdots (8)$$

U: Weight (g) of humidity conditioning material before shaking
V: Weight (g) of humidity conditioning material after shaking
Z': Total amount (parts by weight) of all components supported on 100 parts by weight of carrier in humidity conditioning material before shaking

[Table 1]

|  | Amount of alkali metal element in humidity conditioning material (wt%) | Average particle diameter of silica sol (nm) | Amount of moisture absorbed (wt%) | Rate of supported components dropped (wt%) |
|---|---|---|---|---|
| Example 1 | 0.45 |  | 20 |  |
| Example 2 | 0.51 |  | 20 |  |
| Example 3 | 0.44 |  | 18 |  |
| Example 4 | 0.074 | 20 to 25 | 18 | 2 |
| Example 5 | 0.78 |  | 12 | 18 |
| Example 6 | 0.005 |  | 18 | 39 |
| Example 7 | 0.026 | 10 to 15 | 26 |  |
| Example 8 | 0.014 | 8 to 11 | 25 |  |
| Example 9 | 0.016 | 4 to 6 | 27 |  |
| Comparative Example 1 | 1.6 |  | 7 |  |
| Comparative Example 2 | 2.5 |  | 4 |  |
| Comparative Example 3 | 5.0 |  | 7 |  |

INDUSTRIAL APPLICABILITY

According to an embodiment of the present invention, it is possible to obtain a humidity conditioning material capable of absorbing and desorbing a large amount of moisture.

**Claims**

1. A humidity conditioning material comprising:

    a porous silica material having an average pore diameter of 1 nm or more; and a carrier,
    wherein the humidity conditioning material contains an alkali metal element in an amount of 0.001 wt% or more and less than 1.0 wt%.

2. The humidity conditioning material according to claim 1, further comprising an inorganic binder, wherein the inorganic binder has an average particle diameter at least twice the average pore diameter of the porous silica material.

3. The humidity conditioning material according to claim 1 or 2, further comprising a water-soluble polymer.

4. The humidity conditioning material according to any one of claims 1 to 3, wherein the carrier contains an inorganic fiber.

5. The humidity conditioning material according to any one of claims 1 to 4, wherein the alkali metal element is sodium and/or potassium.

6. The humidity conditioning material according to any one of claims 1 to 5, wherein the porous silica material has an average pore diameter of 1.0 to 3.0 nm.

7. The humidity conditioning material according to any one of claims 1 to 6, wherein the humidity conditioning material contains the alkali metal element in an amount of 0.006 to 0.8 wt%.

8. The humidity conditioning material according to any one of claims 2 to 7, wherein the inorganic binder has an average particle diameter 2.0 times or more and 15 times or less the average pore diameter of the porous silica material.

9. The humidity conditioning material according to any one of claims 2 to 8, wherein the inorganic binder has an average particle diameter of 15 nm or less.

10. A method for producing a humidity conditioning material, the method comprising the following Step (1), Step (2), and Step (3):

    Step (1): a dispersion medium is mixed with a porous silica material having an average pore diameter of 1 nm or more to obtain a slurry, and an amount of alkali metal element in the slurry is adjusted to be 0.001 wt% to 1 wt% relative to a solid content weight therein;
    Step (2): the slurry obtained in Step (1) is applied to a carrier;
    Step (3): the dispersion medium is removed from the carrier coated with the slurry obtained in Step (2) to yield a humidity conditioning material containing the porous silica material and the carrier.

11. The method for producing a humidity conditioning material according to claim 10, the method further comprising the following Step (4):
    Step (4): the humidity conditioning material yielded in Step (3) is heated at a temperature of 300 degrees C or higher.

## INTERNATIONAL SEARCH REPORT

| International application No. |
| --- |
| PCT/JP2019/015937 |

**A. CLASSIFICATION OF SUBJECT MATTER**
Int.Cl. B01D53/28(2006.01)i, B01J20/10(2006.01)i, B01J20/18(2006.01)i,
B01J20/30(2006.01)i, F24F3/14(2006.01)i

According to International Patent Classification (IPC) or to both national classification and IPC

**B. FIELDS SEARCHED**

Minimum documentation searched (classification system followed by classification symbols)
Int.Cl. B01D53/28, B01J20/10, B01J20/18, B01J20/30, F24F3/14

Documentation searched other than minimum documentation to the extent that such documents are included in the fields searched
    Published examined utility model applications of Japan    1922-1996
    Published unexamined utility model applications of Japan    1971-2019
    Registered utility model specifications of Japan    1996-2019
    Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 6-304437 A (TOYOTA CENTRAL R&D LABS., INC.) 01 November 1994, claims, paragraphs [0009], [0017]-[0024], [0031]-[0033], [0043], examples (Family: none) | 1-11 |
| A | JP 8-299745 A (SEIBU GIKEN CO., LTD.) 19 November 1996, claims, examples & US 5753345 A, claims, examples | 1-11 |

|☒| Further documents are listed in the continuation of Box C. | |☐| See patent family annex. |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 29.05.2019 | 11.06.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
|---|
| PCT/JP2019/015937 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-97019 A (TOYOTA CENTRAL R&D LABS., INC.) 14 April 2005, claims, examples (Family: none) | 1-11 |
| A | JP 2006-232612 A (MIZUSAWA IND CHEM LTD.) 07 September 2006, claims, paragraphs [0032], [0033], examples (Family: none) | 1-11 |
| A | JP 2000-126541 A (SEIBU GIKEN CO., LTD.) 09 May 2000, claims, examples (Family: none) | 1-11 |
| A | JP 2006-55725 A (NICHIAS CORPORATION) 02 March 2006, claims, paragraph [0032], examples (Family: none) | 1-11 |

Form PCT/ISA/210 (continuation of second sheet) (January 2015)

**EP 3 782 714 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006026494 A